Europäisches Patentamt

European Patent Office

Office européen des brevets

(11) Veröffentlichungsnummer: **0 539 903 A2**

# (12) EUROPÄISCHE PATENTANMELDUNG

(21) Anmeldenummer: **92118274.7**

(22) Anmeldetag: **26.10.92**

(51) Int. Cl.5: **H02M 3/335**

(30) Priorität: **29.10.91 DE 4135568**

(43) Veröffentlichungstag der Anmeldung:
**05.05.93 Patentblatt 93/18**

(84) Benannte Vertragsstaaten:
**DE ES FR GB**

(71) Anmelder: **ABB PATENT GmbH**
**Kallstadter Strasse 1**
**W-6800 Mannheim 31(DE)**

(72) Erfinder: **Heinemann, Lothar**
**Grimmestrasse 14**
**W-4790 Padernborn(DE)**

(74) Vertreter: **Rupprecht, Klaus, Dipl.-Ing. et al**
**c/o ABB Patent GmbH, Postfach 10 03 51**
**W-6800 Mannheim 1 (DE)**

(54) **Ausschaltentlastungsnetzwerk für Leistungstransistoren in Mehrtransistor-Fluss-Konvertern.**

(57) Für Mehrtransistor-Konverter, inbesondere Zwei-Transistor-Fluß-Konverter oder Doppelflußkonverter werden Schaltungsvarianten für Ausschaltentlastungsnetzwerke vorgeschlagen, die im Vergleich zu einer Anordnung von voneinander unabhängigen Ausschaltentlastungsnetzwerken je Leistungstransistor zu einem verringerten Aufwand führen. Der Vorschlag geht dahin, die Umschwinginduktivitäten einzelner Umschwingkreise magnetisch zu koppeln.

**Fig.1**

EP 0 539 903 A2

Die Erfindung bezieht sich auf ein Ausschalt-entlastungsnetzwerk in einer Fluß-Konverteran-ordnung mit wenigstens zwei Leistungstransistoren.

Das erfindungsgemäße Ausschaltentlastungsnetzwerk wird am Beispiel eines Zwei-Transistor-Fluß (ZTF)-Konverters erläutert. Es ist jedoch auch für Fluß-Konverterschaltungen mit mehr als zwei Transistoren sinngemäß anwendbar; z.B. einem Doppelflußkonverter.

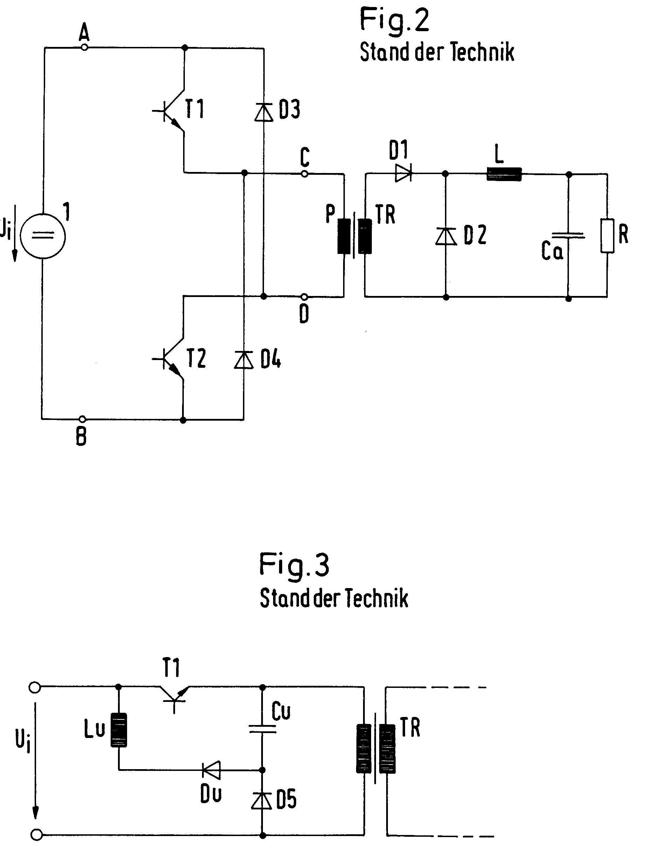

Die Grundschaltung eines ZTF-Konverters ohne Ausschaltentlastungsnetzwerk ist allgemein bekannt und z.B. von J.Wüstehube in ELEKTRONIK 1978, Heft 4, Seiten 102 bis 107, auf Seite 106 als Bild 9 angegeben. Diese bekannte ZTF-Konverterschaltung ist in Figur 2 wiedergegeben. Der ZTF-Konverter weist einen Transformator TR auf, dessen Primärwicklung einen ersten Wicklungsanschluß C und einen zweiten Wicklungsanschluß D hat. Der erste Wicklungsanschluß C ist über einen ersten Leistungstransistor T1 mit einem ersten Spannungsanschluß A einer Spannungsquelle 1 verbunden, der zweite Wicklungsanschluß D über einen zweiten Leistungstransistor T2 mit einem zweiten Spannungsanschluß B der Spannungsquelle 1. Der erste Wicklungsanschluß C ist außerdem über eine zweite Entkopplungsdiode D4 mit dem zweiten Spannungsanschluß B verbunden; der zweite Wicklungsanschluß D ist über eine erste Entkopplungsdiode D3 mit dem ersten Spannungsanschluß A verbunden. Sekundärseitig weist die Schaltung die für einen Durchflußwandler übliche Anordnung einer Gleichrichterdiode D1, einer Drosselspule L, einer Freilaufdiode D2, eines Ausgangskondensators Ca und eines Lastwiderstands R auf.

Die Transistoren T1 und T2 werden beim ZTF-Konverter synchron ein- und ausgeschaltet. Der in Figur 2 dargestellte ZTF-Konverter ist ein sogenannter hart-schaltender Konverter, der nur für relativ niedrige Schaltfrequenzen geeignet ist, weil die Schaltverluste die Leistungstransistoren bei hohen Frequenzen zu stark belasten. Dieses Problem läßt sich nicht durch Überdimensionieren der Transistoren oder durch Parallelschalten von Transistoren lösen. Abhilfe kann ein Ausschaltentlastungsnetzwerk schaffen, das nachstehend auch mit Entlastungsnetzwerk bezeichnet ist.

Eine Konverterschaltung mit Entlastungsnetzwerk ist aus der DE-PS 24 43 892 für einen Sperr-Fluß-Konverter bekannt. Daraus läßt sich die in Figur 3 angegebene Schaltung des Primärteiles eines Sperrfluß-Konverters mit einem Lei-stungstransistor T1 ableiten. Als Ausschaltentla-stungsnetzwerk sind ein Umschwingkondensator Cu, eine Umschwingdiode Du, eine Umschwinginduktivität Lu und eine Entkopplungsdiode D5 angeordnet. Das bekannte Entlastungsnetzwerk läßt sich im Prinzip durch Mehrfachanordnung auch für Konverter mit mehreren Leistungstransistoren anwenden, wodurch sich jedoch ein relativ hoher Gesamtaufwand ergibt.

Eine weitere Konverterschaltung mit Entlastungsnetzwerk ist der EP 244 907 B1 zu entnehmen. Dort handelt es sich um einen Gegentaktkonverter, dessen Halbleiterschalter abwechselnd ein- und ausgeschaltet werden; also um einen Konvertertyp, auf den sich die Erfindung nicht bezieht. Außerdem ist dort ein sehr komplexes Netzwerk angegeben, das mit der Erfindung vermieden werden soll.

Der Patentschrift US 46 69 023 ist ein Zwei-Transistor-Flußkonverter mit einem aufwendigen Entlastungsnetzwerk zu entnehmen, das eine Hilfsspannungsquelle erfordert.

Der Patentschrift US 44 03 269 ist ein Entlastungsnetzwerk für einen Zwei-Transistor-Flußkonverter zu entnehmen, das relativ wenige Bauelemente benötigt. Allerdings müssen diese Bauelemente mindestens für den Wert der Zwischenkreisspannung dimensioniert werden.

Der Erfindung liegt die Aufgabe zugrunde, ein verbessertes Ausschaltentlastungsnetzwerk für Flußkonverter mit mehr als einem Leistungstransistor anzugeben.

Diese Aufgabe wird gelöst durch ein Ausschaltentlastungsnetzwerk für Leistungstransistoren in einer Fluß-Konverteranordnung mit wenigstens zwei Leistungstransistoren, wobei

a) jedem Leistungstransistor ein Umschwingkreis, bestehend aus einer Reihenschaltung ei-nes Umschwingkondensators, einer Um-schwinginduktivität und einer Umschwingdiode parallelgeschaltet ist, und

b) die Umschwinginduktivitäten der einzelnen Umschwingkreise durch Wicklungen auf einem gemeinsamen Kern realisiert sind, wobei die Wicklungsrichtung so gewählt ist, daß sich die magnetischen Flüsse im Kern addieren.

Ausgestaltungen und Vorteile der Erfindung sind der nachstehenden Erläuterung anhand der Figuren der Zeichnung zu entnehmen.

Es zeigen:

| | |
|---|---|
| Figur 1 | Zwei-Transistor-Fluß-(ZTF)-Konverterschaltung mit Ausschaltentlastungsnetzwerk gemäß einer Schaltungsvariante 2, |
| Figur 2 | ZTF-Konverter nach dem Stand der Technik (ohne Entlastungsnetzwerk), |
| Figur 3 | Teil eines Flußkonverters mit Ausschaltentlastungsnetzwerk nach dem Stand der Technik, |
| Figur 4 | erfindungsgemäßes Ausschaltentlastungsnetzwerk in einer Anordnung mit zwei |

Leistungstransistoren (erste Schaltungsvariante),

Figur 5 erfindungsgemäßes Ausschaltentlastungsnetzwerk (zweite Schaltungsvariante),

Figur 6 bis 10 Spannungs und Stromverläufe in der Konverteranordnung nach Figur 1, wobei

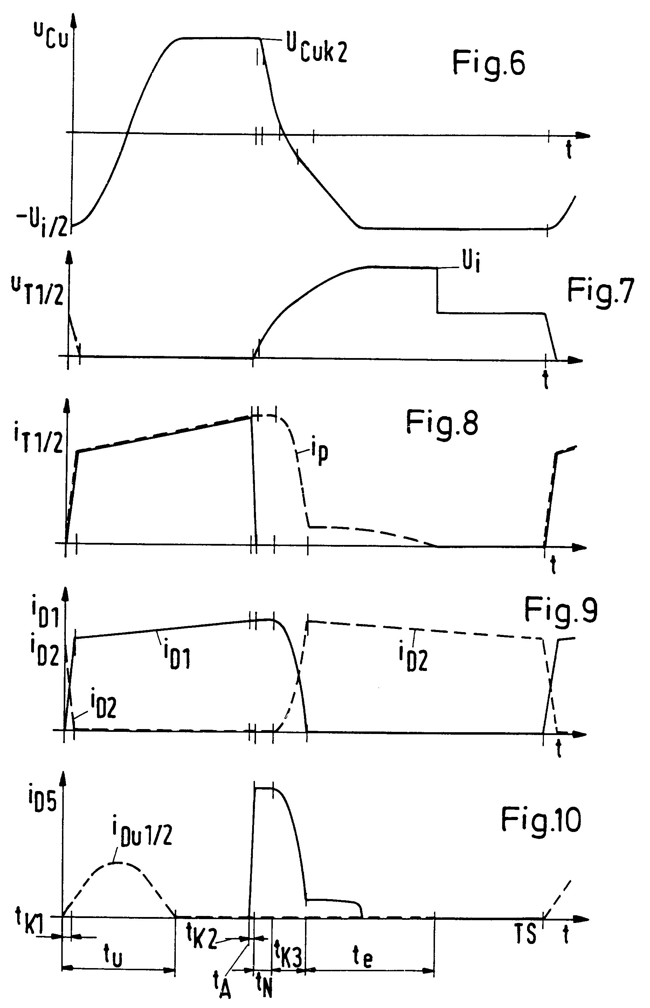

Figur 6 den Spannungsverlauf an einem der Umschwingkondensatoren zeigt,

Figur 7 den Spannungsverlauf an den Leistungstransistoren,

Figur 8 den Stromverlauf in den Leistungstransistoren und den Primärstrom des Transformators,

Figur 9 den Stromverlauf in der Gleichrichterdiode und der Freilaufdiode, und

Figur 10 den Stromverlauf in der Entkopplungsdiode für Schaltungsvariante 2.

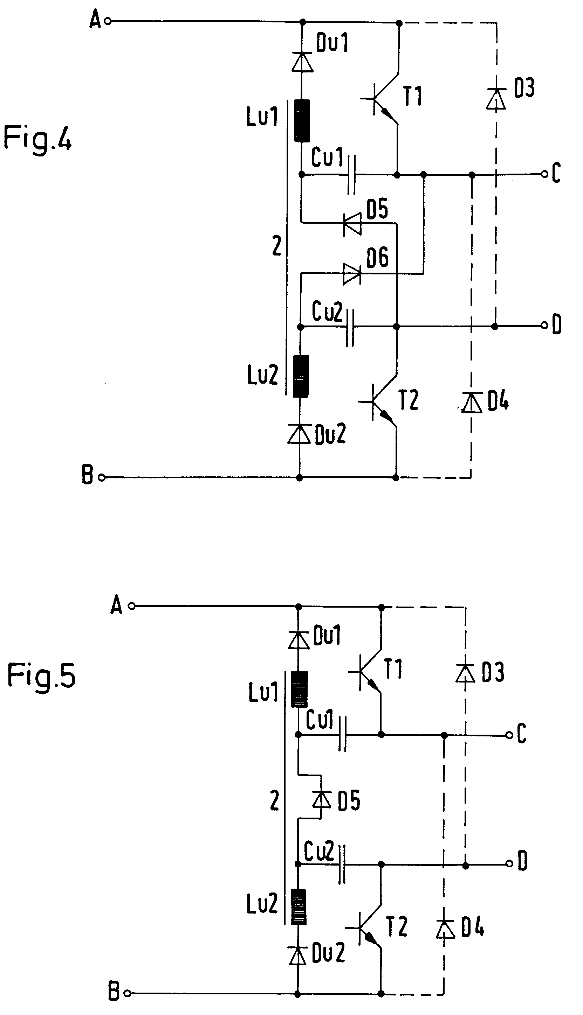

Eine erste Schaltungsvariante für ein Ausschaltentlastungsnetzwerk ist in Figur 4 dargestellt. Sie zeigt den entsprechend der ZTFKonverterGrundschaltung (Figur 2) in den Leitungsweg vom Anschluß A zum Anschluß C eingefügten ersten Leistungstransistor T1 und entsprechend in Leitungsweg zwischen den Anschlüssen B und D den eingefügten Transistor T2. Die beiden Entmagnetisierungsdioden D3 und D4 können, müssen aber nicht in der Schaltung verbleiben. Deshalb sind die Zweige mit den Entmagnetisierungsdioden D3 und D4 gestrichelt gezeichnet.

Parallel zum ersten Transistor T1 ist eine Reihenschaltung eines ersten Umschwingkondensators Cu1, einer ersten Umschwinginduktivität Lu1 und einer ersten Umschwingdiode Du1 geschaltet, wobei der Kondensator Cu1 mit dem Emitter des Transistors T1 verbunden ist. Entsprechend ist zum zweiten Transistor T2 eine Reihenschaltung eines zweiten Umschwingkondensators Cu2, einer zweiten Umschwinginduktivität Lu2 und einer zweiten Umschwingdiode Du2 geschaltet, wobei der Umschwingkondensator Cu2 an den Kollektor des zweiten Transistors 2 angeschlossen ist. An der Verbindungsstelle zwischen der ersten Umschwinginduktivität Lu1 und des ersten Umschwingkondensators Cu1 ist eine erste Entkopplungsdiode D5 angeschlossen, deren zweiter Anschluß mit dem Kollektor des zweiten Transistors T2 verbunden ist. Entsprechend ist eine zweite Entkopplungsdiode D6 zwischen der zweiten Umschwinginduktivität Lu2 bzw. dem Kondensator Cu2 und dem Emitter des ersten Transistors T1 geschaltet.

Erfindungswesentlich ist bei dem in Figur 4 dargestellten Auschaltentlastungsnetzwerk, daß die Umschwinginduktivitäten Lu1 und Lu2 auf einen gemeinsamen Kern 2 gewickelt sind und zwar so, daß sich die magnetischen Flüsse im Kernmaterial addieren. Die beiden Umschwinginduktivitäten Lu1 und Lu2 bilden somit ein integriertes magnetisches Bauelement. Vorteilhaft ist dabei, daß im Vergleich zu nicht magnetisch gekoppelten TeilUmschwingnetzen der einzelnen Leistungstransistoren die Umschwinginduktivitäten Lu1 und Lu2 nur halb so groß sein müssen. Im Vergleich zu einem denkbaren, für zwei Leistungstransistoren gemeinsamen Entlastungsnetzwerk werden die Umschwingelemente Du1, Du2, Cu1, Cu2, Lu1 und Lu2 nur mit dem halben Strom belastet. Voraussetzung für eine Integration der Umschwinginduktivitäten Lu1 und Lu2 ist allerdings, daß Lu1 = Lu2 und Cu1 = Cu2 ist, also die erforderliche Symmetrie gewährleistet ist, damit die Spannungszeitflächen der beiden Induktivitäten gleich sind. Es sollen auch gleiche Dioden für Du1 und Du2 bzw. D5 und D6 verwendet werden, um die Symmetriebedingungen zu erfüllen.

Eine zweite Schaltungsvariante ist in Figur 5 dargestellt. Abweichend von der Anordnung gemäß Figur 4 sind die Umschwingkondensatoren Cu1 und Cu2 nicht parallel, sondern in Reihe geschaltet. Zur Entkopplung der beiden TeilUmschwingkreise ist nur eine Diode D5 erforderlich, wodurch der Bauteileaufwand weiter verringert ist. Die Sperrspannungsbeanspruchung der Umschwingdioden Du1 und Du2 sowie der Umschwingkondensatoren Cu1, Cu2 ist bei dieser Schaltungsvariante im Vergleich zu der Variante nach Figur 4 nur halb so groß, wodurch der Einsatz von SchottkyDioden ermöglicht ist, die ein besonders gutes RecoveryVerhalten und geringe Durchlaßverluste aufweisen. Die zweite Schaltungsvariante erfordert außerdem im Vergleich zur ersten Schaltungsvariante die kleinere Umschwinginduktivität, wodurch die Schaltung besonders für hochfrequente Anwendungen geeignet ist.

Im Hinblick auf beide Schaltungsvarianten ist anzumerken, daß durch ein Verbleiben der Entmagnetisierungsdioden D3 und D4 in der Schaltung die Sperrspannungen an den Leistungstransistoren T1 und T2 definiert nach oben begrenzt werden und zwar auf den Wert der Zwischenkreisspannung $U_i$. Dies kann bei der Auslegung der Sicherheitsreserve für die zulässige Sperrspannung der Transistoren T1 und T2 berücksichtigt werden. Allerdings wird die Entmagnetisierungszeit des Transformators geringfügig verlängert, wenn die Dioden D3 und D4 in der Schaltung verbleiben. Dies ist aber kein Nachteil, da die Magnetisierungsenergie des Transformators regenerativ zur Speisung der Last eingesetzt wird, wodurch sich eine Reduzierung der Umschaltzeit der Transistoren T1, T2 ergibt.

Bei beiden Schaltungsvarianten können in Reihe zu den Umschwinginduktivitäten Lu1, Lu2 zusätzliche sättigbare kleine Induktivitäten geschaltet werden, was bei dem Recovery−Verhalten der Umschwingdioden Du1, Du2 von Vorteil sein kann.

Weiterhin ist anzumerken, daß in Reihe zu den Entmagnetisierungsdioden D3, D4 zusätzlich Zenerdioden (in der Zeichnung nicht dargestellt) geschaltet werden können. Eine solche Anordnung hat den Vorteil, daß die Entmagnetisierung des Transformators TR mit einer höheren Spannung erfolgt und demzufolge die Entmagnetisierung in einer kürzeren Zeit abgeschlossen ist. Die Zenerdioden stellen auch eine Gleichheit der Spannungszeitflächen sicher.

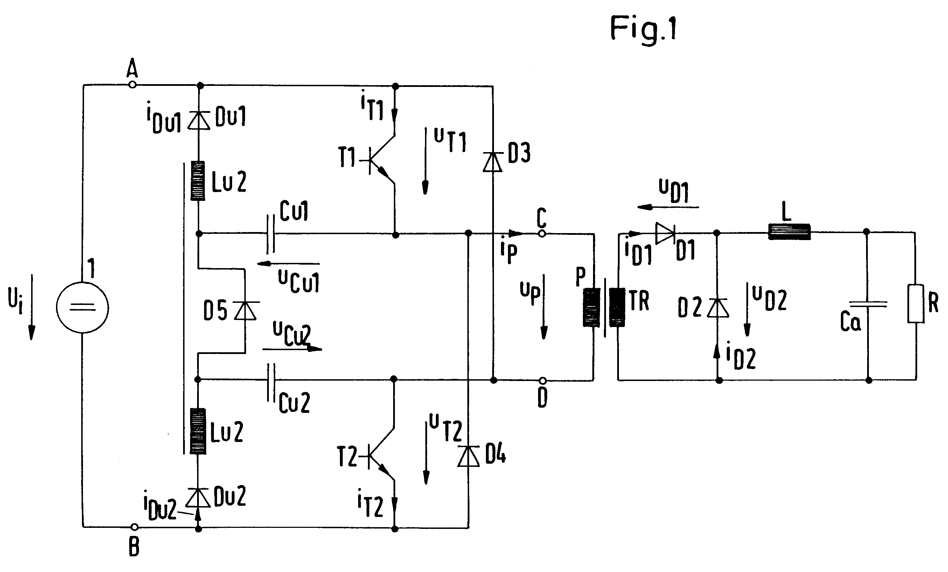

Da beide Schaltungsvarianten auf dem gleichen Funktionsprinzip beruhen, genügt die Funktionsbeschreibung einer der Schaltungsvarianten. Dazu wird eine Anwendung der in Figur 5 dargestellten zweiten Schaltungsvariante im Rahmen einer in Figur 2 als Grundschaltung gezeigten Zwei−Transistor−Fluß−Konverterschaltung herangezogen, die in Figur 1 als Gesamtschaltung mit idealisierten Bauelementen dargestellt ist. In Figur 1 sind auch die zur Erläuterung erforderlichen Strom− und Spannungspfeile eingetragen. Die Strom− und Spannungsverläufe von einigen Strömen und Spannungen sind in den Figuren 6 bis 10 dargestellt. Die Funktionsbeschreibung zur Gesamtschaltung nach Figur 1 für den eingeschwungenen Zustand beginnt in einem Zeitpunkt $t = 0$, wenn die Transistoren T1, T2 eingeschaltet werden und endet zu einem Zeitpunkt $t = TS$, wobei TS die Schaltperiodendauer ist. Die Spannungen $u_{Cu1/2}(t)$ an den Umschwingkondensatoren Cu1 und Cu2 werden zum Zeitpunkt $t = 0$ gesetzt als $u_{Cu1/2}(t = 0) = -U_{Cu1/2,O}$, deren Betrag kleiner oder gleich ist dem Betrag der halben Zwischenkreisspannung $U_i$, da eine Reihenschaltung von zwei Kondensatoren vorliegt (vergleiche Figur 6; die angesprochenen Zeitpunkte t sind jeweils aus Figur 10 ersichtlich).

Nachdem die Leistungstransistoren T1 und T2 eingeschaltet worden sind, kommutiert der Laststrom von Diode D2 nach Diode D1 bis zu einem Zeitpunkt $t = t_{k1}$ der Strom durch die Diode D2 $i_{D2}(t = t_{k1}) = 0$ beträgt (vergleiche Figur 9). Gleichzeitig schwingt durch das Schließen der Leistungstransistoren T1 und T2 die Ladung der Umschwingkondensatoren Cu1, Cu2 über die gekoppelten Umschwinginduktivitäten Lu1, Lu2 sinusförmig um, bis zum Zeitpunkt $t = t_u$ der Umschwingstrom wieder den Wert Null erreicht (vergleiche $i_{Du1/2}$−Verlauf in Figur 10). Zu einem Ausschaltzeitpunkt $t = t_A$ werden die Transistoren T1, T2 wieder ausgeschaltet.

Erreicht die Spannung $u_P(t)$ an der Primärwicklung P den Wert der beiden Kondensatorspannungen, also $u_P(t) = U_{Cu1U} + U_{Cu2U}$ werden die Umschwingkondensatoren Cu1, Cu2 als Spannungsquellen wirksam. Der Strom durch die beiden Leistungstransistoren T1 und T2 kommutiert auf den aus den Umschwingkondensatoren Cu1, Cu2 und der Diode D5 bestehenden Zweig. Der Strom $i_P(t)$ in der Primärwicklung P bleibt von dieser Kommutierung, die sehr schnell abläuft, nahezu unbeeinflußt. Die Spannungen an den beiden Leistungstransistoren T1 und T2 (vergleiche Figur 7) nehmen die Differenz von Zwischenkreisspannung $U_i$ und Umschwingkondensatorspannungen $U_{Cu1/2}$ an. Diese Kommutierung ist beendet, wenn nach der Zeit $t = t_{k2}$ die Ströme durch T1 und T2 Null werden (vergleiche Figur 8).

Der weitere zeitliche Verlauf des Stromes $i_P(t)$ und damit auch der Ströme $i_{D1}(t)$ und $i_{D2}(t)$ wird jetzt durch die Umschwingkondensatoren Cu1, Cu2 bestimmt. Der Lastkreis wirkt jetzt quasi wie eine Konstantstromquelle, die die Umschwingkondensatoren Cu1 und Cu2 linear entlädt. Zudem überlagert sich eine Schwingung, deren Kennkreisfrequenz sich aus Transformatorhaupt− und Streuinduktivität, den parasitären Induktivitäten des Primärkreises und der Umschwingkondensatoren Cu1, Cu2 zusammensetzt.

Wenn nach der Zeit $t = t_N$, also der Nachladephase die Spannung an der Diode D2 den Wert der Durchlaßspannung unterschreitet, wird die Diode D2 leitend. Der Laststrom kommutiert nach Cosinus− und Sinusfunktionen von Diode D1 auf Diode D2, bis nach der Zeit $t = t_{k3}$ der Strom $i_{D2}(t = T_{k3})$ den Wert des Laststromes erreicht (vergleiche Figur 9).

Der Lastkreis ist jetzt vom Primärkreis getrennt. Im weiteren Verlauf wird der Transformator TR entmagnetisiert. Erreicht die Summe der Spannungen $u_{Cu1/2}(t)$ nicht den Wert der halben Zwischenkreisspannung $U_i$, bleiben die beiden Entmagnetisierungsdioden unwirksam. Die gesamte Magnetisierungsenergie des Transformators, der primärseitigen parasitären Induktivitäten und Streuinduktivität des Transformators befindet sich jetzt als Ladung in den Umschwingkondensatoren Cu1, Cu2, die im nächsten Schaltzyklus an den Lastkreis abgegeben wird.

Erreichen die Spannungen $u_{Cu1/2}(t)$ den Wert der halben Zwischenkreisspannung $U_i$, werden die Dioden D3 und D4 leitend. Die restliche, im Transformator noch enthaltene Magnetisierungsenergie wird dann in den Zwischenkreis zurückgespeist. Dies ist in den Figuren 6 bis 10 dargestellt. Die Dioden D3 und D4 werden nach der Zeit $t = t_{e1}$ leitend. Diode D5 sperrt un die Umschwingkondensatoren Cu1, Cu2 bleiben auf der jetzt erreichten negativen Spannung, also $u_{Cu1/2}(t = t_e) = -$

$U_{i/2} = -U_{Cu0}$ aufgeladen. Falls Zenerdioden in Reihe zu den Entmagnetisierungsdioden geschaltet sind, erfolgt die Rückspeisung in den Zwischenkreis erst, wenn die Spannungen an den Umschwingkondensatoren den Wert der halben Zwischenkreisspannung und der Zenerspannung überschritten haben.

Sind die Entmagnetisierungsdioden D3 und D4 nicht vorhanden, können die Spannungen $u_{Cu1/2}(t)$ größere Werte als den Betrag der halben Zwischenkreisspannung annehmen; wie im Fall der Anordnung von Zenerdioden. Die Entmagnetisierung des Transformators kann in diesem Fall schneller erfolgen. Allerdings werden die Leistungstransistoren dann mit höheren Sperrspannungen belastet.

Ist die Entmagnetisierung des Transformators nach der Entmagnetisierungszeit $t = t_e$ abgeschlossen, sperren die Dioden D3 und D4. Die Umschwingkondensatoren Cu1 und Cu2 bleiben auf der jetzt erreichten negativen Spannung, also $u_{Cu1/2}(t = t_e) = -U_{i/2} = -U_{Cu0}$ aufgeladen.

Die Sperrspannungen an den beiden Leistungstransistoren T1 und T2 erreichen in diesem Schaltintervall ihren maximalen Wert, nämlich den Wert der Zwischenkreisspannung Ui.

Nachdem der Transformator entmagnetisiert ist, laufen primärseitig bei idealen Bauelementen keinerlei Schwingvorgänge mehr ab. Die Sperrspannungen an den Transistoren T1 und T2 verringern sich auf das Niveau der halben Zwischenkreisspannung, wie auch beim ZTF−Konverter ohne das Entlastungsnetzwerk ($u_P(t) = 0$). An der Diode D5 liegt als Sperrspannung die Spannung der beiden Umschwingkondensatoren Cu1, Cu2 an. Die Leistungstransistoren T1 und T2 können jetzt wieder eingeschaltet werden.

Bezugszeichenliste

| 1 | Spannungsquelle für Zwischenkreisspannung ($U_i$) |
| 2 | Kern |
| A | erster Spannungsanschluß |
| B | zweiter Spannungsanschluß |
| C | erster Wicklungsanschluß |
| Ca | Ausgangskondensator |
| Cu, Cu1, Cu2 | Umschwingkondensator |
| D | zweiter Wicklungsanschluß |
| D1 | Gleichrichterdiode |
| D2 | Freilaufdiode |
| D3 | erste Entmagnetisierungsdiode |
| D4 | zweite Entmagnetisierungsdiode |
| D5 | erste Entkopplungsdiode |
| D6 | zweite Entkopplungsdiode |
| Du, Du1, Du2 | Umschwingdiode |
| Lu, Lu1, Lu2 | Umschwinginduktivität |
| P | Primärwicklung |
| R | Lastwiderstand |
| T1 | erster Leistungstransistor |
| T2 | zweiter Leistungstransistor |
| TR | Transformator |
| $i_{D...}$ | Strom in der jeweiligen Diode |
| $i_{Lu}$ | Strom in der Umschwinginduktivität |
| $i_P$ | Strom in der Primärwicklung des Transformators |
| $i_{T1}$ | Strom im ersten Leistungstransistor |
| $i_{T2}$ | Strom im zweiten Leistungstransistor |
| $t$ | Zeit |
| TS | Schaltperiodendauer |
| $U_i$ | Zwischenkreisspannung |
| $u_{Cu1}$, $u_{Cu2}$ | Spannung an den Umschwingkondensatoren |
| $u_{Du}$ | Spannung an der Umschwingdiode |
| $u_{D...}$ | Spannung an der jeweiligen Diode |
| $u_P$ | Spannung an der Primärwicklung des Transformators |
| $u_{T1}$, $u_{T2}$ | Spannung an den Transistoren T1, T2 |

**Patentansprüche**

1. Ausschaltentlastungsnetzwerk für Leistungstransistoren in einer Fluß−Konverteranordnung mit wenigstens zwei Leistungstransistoren, dadurch gekennzeichnet, daß

a) jedem Leistungstransistor (T1,T2) ein Umschwingkreis, bestehend aus einer Reihenschaltung eines Umschwingkondensators (Cu1,Cu2), einer Umschwinginduktivität (Lu1,Lu2) und einer Umschwingdiode (Du1,Du2) parallelgeschaltet ist, und

b) die Umschwinginduktivitäten (Lu1,Lu2) der einzelnen Umschwingkreise durch Wicklungen auf einem gemeinsamen Kern (2) realisiert sind, wobei die Wicklungsrichtung so gewählt ist, daß sich die magnetischen Flüsse im Kern (2) addieren.

2. Ausschaltentlastungsnetzwerk nach Anspruch 1, dadurch gekennzeichnet, daß in einem Zwei−Transistor−Fluß−Konverter oder Doppelflußkonverter die Umschaltkondensatoren (Cu1,Cu2) parallelgeschaltet sind durch Anordnung einer ersten Entkopplungsdiode (D5) zwischen dem Kollektor des zweiten Leistungstransistors (T2) und der Verbindungsstelle zwischen dem ersten Umschwingkondensator (Cu1) und der ersten Umschwinginduktivität (Lu1) sowie durch Anordnung einer zweiten Entkopplungsdiode (D6) zwischen dem Emitter des ersten Leistungstransistors (T1) und der Verbindungsstelle zwischen dem zweiten Umschwingkondensator (2) und der zweiten Umschwinginduktivität (Lu2).

3. Ausschaltentlastungsnetzwerk nach Anspruch 1, dadurch gekennzeichnet, daß in einem Zwei – Transistor – Fluß – Konverter oder Dop – pelflußkonverter die Umschwingkondensatoren (Cu1,Cu2) in Reihe geschaltet sind durch An – ordnung einer Entkopplungsdiode (D5) zwi – schen dem jeweiligen Verbindungspunkt von Umschwingkondensator (Cu1,Cu2) und Um – schwinginduktivität (Lu1,Lu2) der beiden Um – schwingkreise.

# Fig.1

EP 0 539 903 A2

**Fig.2**
Stand der Technik

**Fig.3**
Stand der Technik

Fig.4

Fig.5

Fig.6

Fig.7

Fig.8

Fig.9

Fig.10